# EUROPEAN PATENT APPLICATION

(11) **EP 4 398 267 A1**
(43) Date of publication of application: **10.07.2024**
(21) Application number: 22864357.3
(22) Date of filing: 24.08.2022
(51) Int. Cl.: H01B 1/06, C01B 25/45, H01B 1/08, H01M 4/40, H01M 4/48, H01M 4/485, H01M 4/505, H01M 4/525, H01M 4/58, H01M 4/587, H01M 4/62, H01M 10/052, H01M 10/0562

(54) **SOLID ELECTROLYTE, SOLID-STATE BATTERY, AND SOLID ELECTROLYTE MATERIAL**

(30) Priority: 30.08.2021 JP 2021139923
(71) Applicant: Resonac Corporation, Tokyo 105-7325 (JP)
(72) Inventor: SEI, Ryosuke, Tokyo 105-8518 (JP); LEE, Kunchan, Tokyo 105-8518 (JP)
(74) Representative: Strehl Schübel-Hopf & Partner
(86) International application number: PCT/JP2022/031815
(87) International publication number: WO 2023/032773

(57) **Abstract**

One embodiment of the present invention relates to a solid electrolyte, an all-solid-state battery, or a solid electrolyte material, and the solid electrolyte contains: a lithium ion conducting phase having at least tantalum, phosphorus, and oxygen as constituent elements; and a compound phase having at least phosphorus and oxygen as constituent elements and being free of tantalum, in which, in a scanning transmission electron microscopy-energy dispersive X-ray spectroscopy (STEM-EDX) image, the area proportion of the compound phase is 0.40% or more based on 100% in total of the area of the lithium ion conducting phase, the area of the compound phase, and the area of voids, and the solid electrolyte has at least lithium, tantalum, phosphorus, and oxygen as constituent elements.

## Description

### Technical Field

One embodiment of the present invention relates to a solid electrolyte, an all-solid-state battery, or a solid electrolyte material.

### Background Art

In recent years, there has been a demand for the development of a high output and high capacity battery as a power source for, for example, a notebook computer, a tablet terminal, a cellphone, a smartphone or an electric vehicle (EV). Among these, an all-solid-state battery using a solid electrolyte instead of a liquid electrolyte such as an organic solvent has attracted attention as a battery having excellent charge/discharge efficiency, charging speed, safety, and productivity.

As the solid electrolyte, an inorganic solid electrolyte has attracted attention, and as the inorganic solid electrolyte, oxide and sulfide solid electrolytes are mainly known.

In the case where a sulfide solid electrolyte is used, there are advantages such as being able to manufacture a battery by, for example, cold pressing, but it is unstable to humidity and harmful hydrogen sulfide gas may be generated, and thus from the viewpoint of, for example, safety, the development of an oxide solid electrolyte is underway (for example, Patent Literatures 1 to 2).

### Citation List

### Patent Literature

Patent Literature 1: WO2020/036290
Patent Literature 2: JP2020-194773A

### Summary of Invention

### Technical Problem

An oxide solid electrolyte has an extremely high grain boundary resistance, and in order to obtain an ion conductivity that allows use thereof in an all-solid-state battery, a powder of the solid electrolyte material needs not only to be compression molded, but also sintered to increase its relative density (percentage of actual density relative to theoretical density).

However, it was found that conventional solid electrolytes such as those described in Patent Literatures 1 to 2 have many voids, and that these voids may cause, in the case where the solid electrolytes are used in batteries such as all-solid-state batteries, the part including the solid electrolyte such as the solid electrolyte layer to easily crack, or may cause deterioration of the performance of the batteries and short-circuits inside the batteries due to production of dendrites.

One embodiment of the present invention provides a solid electrolyte material that can provide a solid electrolyte with fewer voids, and in the case where the solid electrolyte is used in a battery, can provide a battery that is highly reliable (less likely to crack and less likely to be short-circuited due to suppressed dendrite production), as well as a solid electrolyte.

### Solution to Problem

The present inventors have carried out diligent studies and as a result, have found that the above problem can be solved according to the following configuration examples, and have completed the present invention.

The configuration examples of the present invention are as follows.

[1] A solid electrolyte containing: a lithium ion conducting phase having at least tantalum, phosphorus, and oxygen as constituent elements; and a compound phase having at least phosphorus and oxygen as constituent elements and being free of tantalum,
   in which, in a scanning transmission electron microscopy-energy dispersive X-ray spectroscopy (STEM-EDX) image, the area proportion of the compound phase is 0.40% or more based on 100% in total of the area of the lithium ion conducting phase, the area of the compound phase, and the area of voids, and
   the solid electrolyte has at least lithium, tantalum, phosphorus, and oxygen as constituent elements.
[2] The solid electrolyte according to [1], in which, in a STEM-EDX image, no voids are observed, or voids are observed and the area proportion of the voids is smaller than the area proportion of the compound phase.
[3] The solid electrolyte according to [2], in which the area proportion of the voids is 3.0% or less based on 100% in total of the area of the lithium ion conducting phase, the area of the compound phase, and the area of voids.
[4] An all-solid-state battery including:
   a positive electrode having a positive electrode active material;
   a negative electrode having a negative electrode active material; and
   a solid electrolyte layer between the positive electrode and the negative electrode,
      in which
   the solid electrolyte layer includes the solid electrolyte according to any of [1] to [3].
[5] The all-solid-state battery according to [4], in which
   the positive electrode active material includes one or more compounds selected from the group consisting of LiM3PO₄ [M3 is one or more elements selected from the group consisting of Mn, Co, Ni, Fe, Al, Ti, and V, or two elements V and O.J, LiM5VO₄ [M5 is one or more elements selected from the group consisting of Fe, Mn, Co, Ni, Al, and Ti.], Li₂M6P₂O₇ [M6 is one or more elements selected from the group consisting of Fe, Mn, Co, Ni, Al, Ti, and V, or two elements V and o.], LiVP₂O₇, Liₓ₇V_{y7}M7_{z7} [2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr.], Li₁₊ₓ₈Alₓ₈M8₂₋ₓ₈(PO₄)₃ [0 ≤ x8 ≤ 0.8, and M8 is one or more elements selected from the group consisting of Ti and Ge.], LiNi_{1/3}Co_{1/3}Mn_{1/3}O₂, LiCoO₂, LiNiO₂, LiMn₂O₄, Li₂CoP₂O₇, Li₃V₂(PO₄)₃, Li₃Fe₂(PO₄)₃, LiNi_{0.5}Mn_{1.5}O₄, and Li₄Ti₅O₁₂.
[6] The all-solid-state battery according to [4] or [5], in which
   the negative electrode active material includes one or more compounds selected from the group consisting of LiM3PO₄ [M3 is one or more elements selected from the group consisting of Mn, Co, Ni, Fe, Al, Ti, and V, or two elements V and 0.], LiM5VO₄ [M5 is one or more elements selected from the group consisting of Fe, Mn, Co, Ni, Al, and Ti.], Li₂M6P₂O₇ [M6 is one or more elements selected from the group consisting of Fe, Mn, Co, Ni, Al, Ti, and V, or two elements V and o.], LiVP₂O₇, Liₓ₇V_{y7}M7_{z7} [2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr.], Li₁₊ₓ₈Alₓ₈M8₂₋ₓ₈(PO₄)₃ [0 ≤ x8 ≤ 0.8, and M8 is one or more elements selected from the group consisting of Ti and Ge.], (Li_{3-a9x9+(5-b9)y9}M9ₓ₉)(V_{1-y9}M10_{y9})O₄ [M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is the average valence of M9, and b9 is the average valence of M10.], LiNb₂O₇, Li₄Ti₅O₁₂, Li₄Ti₅PO₁₂, TiO₂, LiSi, and graphite.
[7] The all-solid-state battery according to any of [4] to [6], in which the positive electrode and negative electrode contain the solid electrolyte according to any of [1] to [3] .
[8] A solid electrolyte material including at least lithium, tantalum, phosphorus, and oxygen as constituent elements,
   the solid electrolyte material optionally including at least one element selected from the following element M1 and the following element M2 as an optional constituent element, and
   the solid electrolyte material having a value A represented by the following expression (1) of more than 50.
   element M1: one or more elements selected from the group consisting of Bi, Nb, Zr, Ga, Sn, Hf, W, and Mo
   element M2: one or more elements selected from the group consisting of B, Si, Al, and Ge A = (number of P atoms + total number of element M2 atoms) / (number of Ta atoms + total number of element M1 atoms) × 100

### Advantageous Effects of Invention

According to one embodiment of the present invention, there can be provided a solid electrolyte with fewer voids.

Also, according to one embodiment of the present invention, there can be provided a battery that is highly reliable (less likely to crack and less likely to be short-circuited due to suppressed dendrite production).

### Brief Description of Drawings

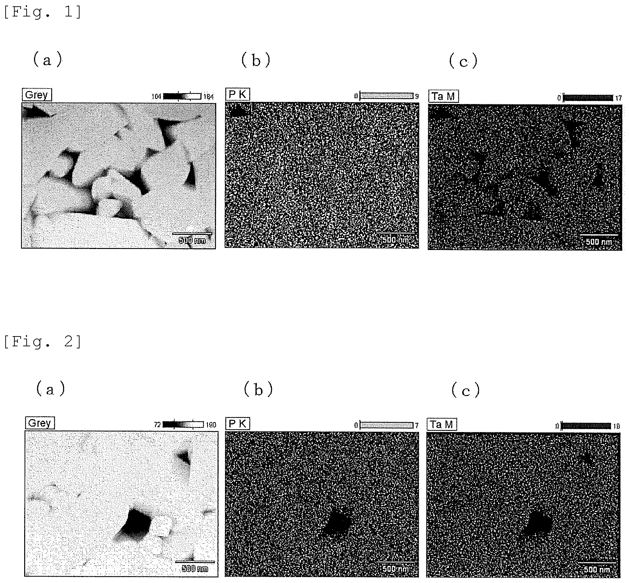

[Figure 1] Figure 1 shows scanning transmission electron microscopy-energy dispersive X-ray spectroscopy (STEM-EDX) images of the solid electrolyte obtained in Example 3, (a) is the scattered electron image, (b) is the EDX mapping image of phosphorus, and (c) is the EDX mapping image of tantalum.
[Figure 2] Figure 2 shows scanning transmission electron microscopy-energy dispersive X-ray spectroscopy (STEM-EDX) images of the solid electrolyte obtained in Comparative Example 1, (a) is the scattered electron image, (b) is the EDX mapping image of phosphorus, and (c) is the EDX mapping image of tantalum.

### Description of Embodiments

### <<Solid electrolyte material>>

The solid electrolyte material according to one embodiment of the present invention (hereinafter, also referred to as "the present material") has the following characteristics:
including at least lithium, tantalum, phosphorus, and oxygen as constituent elements;
optionally including at least one element selected from the following element M1 and the following element M2 as an optional constituent element; and
having a value A represented by the following expression (1) of more than 50.

Element M1: one or more elements selected from the group consisting of Bi, Nb, Zr, Ga, Sn, Hf, W, and Mo
Element M2: one or more elements selected from the group consisting of B, Si, Al, and Ge A = (number of P atoms + Total number of element M2 atoms) / (Number of Ta atoms + Total number of element M1 atoms) × 100

For example, the shape and size of the present material are not particularly limited, and the present material is preferably in the form of a particle (powder), and the average particle size (D50) of the present material is preferably 0.1 to 10 µm and more preferably 0.1 to 5 µm. Note that, in the present invention, the average particle size means the 50% particle size (D50) in the volume-based cumulative particle size distribution, unless otherwise noted.

When the average particle size of the present material is in the above range, the solid electrolyte obtained from the present material, particularly the solid electrolyte (sintered body) obtained by firing the present material, tends to exhibit a higher ion conductivity.

The elements constituting the present material are not particularly limited as long as the present material includes lithium, tantalum, phosphorus, and oxygen, and the present material may include one or more elements selected from the group consisting of B, Bi, Nb, Zr, Ga, Sn, Hf, W, Mo, Si, Al, and Ge.

The content of the lithium element in the present material is preferably 5.0 atomic % or more and more preferably 9.0 atomic % or more, and preferably 20.0 atomic % or less and more preferably 15.0 atomic % or less, from the viewpoint of, for example, being able to easily obtain a solid electrolyte having a higher lithium ion conductivity.

Note that the content of each element in the present material can be measured, for example, by the absolute intensity quantification method of Auger electron spectroscopy (AES) using a standard powder sample containing Mn, Co, and Ni in a proportion of 1:1:1 as a lithium-containing transition metal oxide such as LiCoO₂. In addition thereto, the content thereof can be determined by a conventionally known quantitative analysis. For example, the content of each element in the present material can be determined using a high frequency inductively coupled plasma-atomic emission spectrometer (ICP-AES) after adding an acid to the present material for thermal decomposition and then adjusting the volume of the thermal decomposition product.

The content of the tantalum element in the present material is preferably 10.6 atomic % or more and more preferably 11.0 atomic % or more, and preferably 16.6 atomic % or less and more preferably 16.0 atomic % or less, from the viewpoint of, for example, being able to easily obtain a solid electrolyte having a higher lithium ion conductivity.

From the viewpoint of, for example, being able to easily obtain a solid electrolyte with fewer voids, the value A represented by the following expression (1) is more than 50, preferably 51 or more, more preferably 53 or more, and still more preferably 55.0 or more and the upper limit of the value A is preferably 60 and more preferably 58.

Note that, in the following expression (1), the "(number of P atoms + number of element M2 atoms)" is the "number of P atoms" in the case where the present material does not have the element M2 as a constituent element, and the "(number of Ta atoms + number of element M1 atoms)" is the "number of Ta atoms" in the case where the present material does not have the element M1 as a constituent element. A = (number of P atoms + total number of element M2 atoms) / (number of Ta atoms + total number of element M1 atoms × 100

For the same reason as described above, the content of the phosphorus element in the present material is preferably 5.3 atomic % or more and more preferably 5.5 atomic % or more, and preferably 8.3 atomic % or less and more preferably 8.2 atomic % or less.

In the case where the present material includes one or more elements selected from the group consisting of B, Bi, Nb, Zr, Ga, Sn, Hf, W, Mo, Si, Al, and Ge, the content of each of the elements selected from the group consisting of B, Bi, Nb, Zr, Ga, Sn, Hf, W, Mo, Si, Al, and Ge in the present material is preferably 0.1 to 5.0 atomic % and more preferably 0.1 to 3.0 atomic %, from the viewpoint that for example, it tends to be able to easily obtain a solid electrolyte exhibiting a higher ion conductivity.

### <Method for producing the present material>

The present material is preferably produced as a component (Z) including lithium, tantalum, phosphorus, and oxygen as constituent elements, for example, by a method (I) including a pulverization step of pulverizing (pulverizing and mixing) a material to be pulverized including lithium, tantalum, phosphorus, and oxygen as constituent elements.

In the pulverization step, it is preferable to pulverize the material to be pulverized such that the resulting present material is made amorphous by a mechanochemical reaction or such that the average particle size of the present material is in the above range.

Examples of the pulverization step include a pulverizing method using, for example, a roll tumbling mill, a ball mill, a small diameter ball mill (bead mill), a medium stirring mill, an air flow pulverizer, a mortar, an automatic kneading mortar, a tank crusher, or a jet mill. Among these, a pulverizing method using a ball mill or a bead mill is preferable, and a pulverizing method using a ball mill using a ball having a diameter of 0.1 to 10 mm is more preferable, from the viewpoint of, for example, being able to easily obtain a solid electrolyte exhibiting a higher ion conductivity when a solid electrolyte is obtained from the present material.

The time of the pulverization step is preferably 0.5 to 48 hours and more preferably 2 to 48 hours, from the viewpoint of, for example, being able to easily obtain the present material that is made amorphous by a mechanochemical reaction and has an average particle size (D50) in the above range.

In the pulverization step, the mixing may be carried out while the pulverization is carried out while carrying out heating if necessary, and the pulverization step is usually carried out at room temperature.

In addition, the pulverization step may be carried out in the atmosphere, and is preferably carried out in an atmosphere of nitrogen gas and/or argon gas in which the oxygen gas content is adjusted in the range of 0 to 20% by volume.

The raw material used for the material to be pulverized is preferably an inorganic compound from the viewpoint of ease of handling.

The raw material may be produced and obtained by a conventionally known method, or a commercially available product may be used as the raw material.

Examples of the method (I) include
a method (i) using a compound including a lithium atom, a compound including a tantalum atom, and a compound including a phosphorus atom, as the material to be pulverized.

Examples of the compound including a lithium atom include lithium carbonate (Li₂CO₃), lithium oxide (Li₂O), lithium hydroxide (LiOH), lithium acetate (LiCH₃COO), and hydrates thereof. Among these, lithium carbonate, lithium hydroxide, and lithium acetate are preferable in that these are easily decomposed and reacted.

As the compound including a lithium atom, one may be used, or two or more may be used.

Examples of the compound including a tantalum atom include tantalum pentoxide (Ta₂O₅) and tantalum nitrate (Ta(NO₃)₅). Among these, tantalum pentoxide is preferable from the viewpoint of cost.

As the compound including a tantalum atom, one may be used, or two or more may be used.

As the compound including a phosphorus atom, a phosphate is preferable, and examples of the phosphate include diammonium hydrogen phosphate ((NH₄)₂HPO₄) and monoammonium dihydrogen phosphate (NH₄H₂PO₄) in that these are easily decomposed and reacted.

As the compound including a phosphorus atom, one may be used, or two or more may be used.

In the case where the present material includes one or more elements M1 selected from the group consisting of Bi, Nb, Zr, Ga, Sn, Hf, W, and Mo, and/or in the case where the present material includes one or more elements M2 selected from the group consisting of B, Si, Al and Ge, there is a method (i') using a compound including a lithium atom, a compound including a tantalum atom, a compound including a phosphorus atom, and further a compound including the elements M1 and/or a compound including the elements M2 as the material to be pulverized.

The compound including the elements M1 is not particularly limited, and an inorganic compound is preferable from the viewpoint of ease of handling, and examples thereof include an oxide and a nitrate of M1. Among these, an oxide is preferable from the viewpoint of cost.

As the compound including the elements M1, one may be used, or two or more may be used.

In the case where M1 is Nb, examples of the compound including a niobium atom include Nb₂O₅, LiNbO₃, LiNbsOs, and NbPOs.

As the compound including a niobium atom, one may be used, or two or more may be used.

In the case where M1 is Bi, examples of the compound including a bismuth atom include LiBiO₂, Li₃BiO₃, Li₄Bi₂O₅, Li_{2.4}Al_{0.2}BiO₃, and Bi₂O₃.

As the compound including a bismuth atom, one may be used, or two or more may be used.

In the case where M1 is Ga or Sn, examples of the oxide thereof include gallium oxide (Ga₂O₃) and tin oxide (SnO₂), respectively.

In the case where M1 is Zr, Hf, W, or Mo, examples of the oxide thereof include zirconium oxide (ZrO₂), hafnium oxide (HfO₂), tungsten oxide (WO₃), and molybdenum oxide (MoO₃), respectively. In the case where M1 is Zr, Hf, W, or Mo, in addition to the oxide thereof, zirconium hydroxide (Zr(OH)₄), hafnium hydroxide (Hf(OH)₄), tungstic acid (H₂WO₄), and molybdic acid (H₂MoO₄) can also be used from the viewpoint of ease of reaction.

The compound including the elements M2 is not particularly limited, and an inorganic compound is preferable from the viewpoint of ease of handling, and examples thereof include an oxide of M2.

As the compound including the elements M2, one may be used, or two or more may be used.

In the case where M2 is B, examples of the compound including a boron atom include LiBO₂, LiB₃O₅, Li₂B₄O₇, Li₃B₁₁O₁₈, Li₃BO₃, Li₃B₇O₁₂, Li₄B₂O₅, Li₆B₄O₉, Li₃₋ₓ₅B₁₋ₓ₅Cₓ₅O₃ (0 < x <1) , Li₄₋ₓ₆B₂₋ₓ₆Cₓ₆O₅ (0 < x6 <2), Li_{2.4}Al_{0.2}BO₃, Li_{2.7}Al_{0.1}BO₃, B₂O₃, and H₃BO₃.

As the compound including a boron atom, one may be used, or two or more may be used.

In the case where M2 is Si, examples of the compound including a silicon atom include SiO₂, Li₂SiO₃, Li₂Si₂O₅, Li₂Si₃O₇, Li₄SiO₄, Li₆Si₂O₇, and Li₈SiO₆.

As the compound including a silicon atom, one may be used, or two or more may be used.

In the case where M2 is Ge or Al, examples of the oxide thereof include germanium oxide (GeO₂) and aluminum oxide (Al₂O₃), respectively.

For the mixing ratio of the raw materials, these may be mixed, for example, in amounts such that the content of each constituent element in the present material obtained is in the above range.

In the firing step described later, a lithium atom is likely to flow out of the system, and thus the compound including a lithium atom may be excessively used by about 10 to 20%.

In addition, in the firing step described later, in order to suppress the generation of a by-product, the compound including a phosphorus atom may be excessively used by about 1 to 10%.

In the method (i) and the method (i'), each raw material may be mixed in advance before the pulverization step, and each raw material is preferably mixed while pulverized (pulverized and mixed) in the pulverization step.

In addition, examples of the method (I) also include
a method (ii) using a compound (a) including lithium, tantalum, phosphorus, and oxygen as constituent elements and a phosphorus compound (b) (hereinafter, also simply referred to as " the compound (b)") as the material to be pulverized, or
a method (iii) using a compound (c) including lithium, tantalum, phosphorus, and oxygen as constituent elements as the material to be pulverized [note that the compound (c) is a compound having a value A represented by the above expression (1) in the above range].

In addition, in the methods (ii) and (iii), a compound including the elements M1 and/or a compound including the elements M2 may be further used.

In the method (ii), the compound (a) and the compound (b) may be mixed in advance before the pulverization step, and the compound (a) and the compound (b) are preferably mixed while pulverized (pulverized and mixed) in the pulverization step.

### • Compound (a)

The compound (a) is a compound including lithium, tantalum, phosphorus, and oxygen as constituent elements, is preferably an oxide including these elements, and is more preferably a lithium ion conductive compound including these elements.

The compound (a) may be the same compound as the compound (c), and the value A represented by the above expression (1) of the compound (a) may be lower than the lower limit of the above range.

As the compound (a) used in the method (ii), one may be used, or two or more may be used.

The compound (a) is preferably a compound having a monoclinic structure. Whether the compound (a) has a monoclinic structure can be determined, for example, by Rietveld analysis of an X-ray diffraction (XRD) pattern of the compound (a), specifically by the method of the following Examples.

Specific examples of the compound (a) include a compound (a1) that includes lithium, tantalum, phosphorus, and oxygen as constituent elements, and may further include one or more elements M1 selected from the group consisting of Bi, Nb, Zr, Ga, Sn, Hf, W, and Mo, and a compound (a2) that includes lithium, tantalum, phosphorus, and oxygen as constituent elements, and may further include one or more elements M2 selected from the group consisting of B, Si, Al and Ge. Among these, the compound (a) is preferably a compound consisting only of lithium, tantalum, phosphorus, and oxygen as constituent elements, and more preferably LiTa₂PO₈, from the viewpoint of, for example, exerting the advantageous effects of the present invention more.

The compound (a1) is preferably LiTa₂PO₈ or a compound obtained by replacing a part of Ta of LiTa₂PO₈ with the element(s) M1, and preferably has a monoclinic structure.

The compound (a1) is specifically preferably a compound represented by the composition formula Li_{[1+(5-a)x]}Ta₂₋ₓM1ₓPO₈ [where M1 is one or more elements selected from the group consisting of Bi, Nb, Zr, Ga, Sn, Hf, W, and Mo, 0.0 ≤ x < 1.0, and a is the average valence of M1].

Bi, Nb, W, and Mo are more preferable, Bi, Nb, and W are still more preferable, and Bi and Nb are particularly preferable as M1, from the viewpoint of, for example, increasing the lithium ion conductivity at a crystal grain boundary in the solid electrolyte obtained by using the compound (a).

The x is preferably 0.95 or less, more preferably 0.90 or less, still more preferably 0.85 or less, more preferably 0.80 or less, and particularly preferably 0.75 or less.

When x is in the above range, the lithium ion conductivity at a crystal grain boundary tends to be high in the solid electrolyte obtained by using the compound (a).

Depending on the valence and content of M1, the amount of Li varies according to the average valence of M1 such that the charge neutrality of the compound (a) described above can be obtained. The average valence represented by the a can be determined as follows. In the case where M1 is composed of two or more elements, the a is calculated by weighted averaging using the valence of each element and the content of each element. For example, in the case where M1 is composed of 80 atomic % Nb and 20 atomic % Zr, a is calculated as (+5 × 0.8) + (+4 × 0.2) = +4.8. In addition, in the case where M1 is composed of 80 atomic % Nb and 20 atomic % W, a is calculated as (+5 × 0.8) + (+6 × 0.2) = +5.2.

The compound (a2) is preferably LiTa₂PO₈ or a compound obtained by replacing a part of P of LiTa₂PO₈ with the element(s) M2, and preferably has a monoclinic structure.

The compound (a2) is specifically preferably a compound represented by the composition formula Li_{[1+(5-b)y]}Ta₂P_{1-y}M2_{y}O₈ [where M2 is one or more elements selected from the group consisting of B, Si, Al and Ge, 0.0 ≤ y < 0.7, and b is the average valence of M2].

B, Si, and Al are more preferable, and B and Si are still more preferable as M2, from the viewpoint of, for example, increasing the lithium ion conductivity at a crystal grain boundary in the solid electrolyte obtained by using the compound (a).

The y is preferably 0.65 or less, more preferably 0.60 or less, and still more preferably 0.55 or less.

When y is in the above range, the total ion conductivity, which is the sum of the lithium ion conductivity within a crystal grain and the lithium ion conductivity at a crystal grain boundary, tends to be high in the solid electrolyte obtained by using the compound (a).

The average valence represented by the b can be determined in the same manner as in the method for calculating the average valence a described above.

The method for producing the compound (a) is not particularly limited, and for example, a conventionally known production method such as a solid phase reaction or a liquid phase reaction can be adopted. Specific examples of the method for producing the compound (a) include a method including at least a mixing step and a firing step each in one stage.

Examples of the mixing step in the method for producing the compound (a) include a step of mixing a compound including a lithium atom (for example, an oxide or a carbonate), a compound including a tantalum atom (for example, an oxide or a nitrate), a compound including a phosphorus atom (for example, an ammonium salt), and, if necessary, a compound including the elements M1 (for example, an oxide) and/or a compound including the elements M2 (for example, an oxide), which are raw materials.

As each of the raw materials, one may be used, or two or more may be used.

Examples of the method for mixing the raw materials include a mixing method using, for example, a roll tumbling mill, a ball mill, a small diameter ball mill (bead mill), a medium stirring mill, an air flow pulverizer, a mortar, an automatic kneading mortar, a tank crusher, or a jet mill.

For the mixing ratio of the raw materials, these may be mixed, for example, at a stoichiometric ratio so as to obtain a desired composition of the compound (a).

In the firing step described later, a lithium atom is likely to flow out of the system, and thus the compound including a lithium atom may be excessively used by about 10 to 20%. In addition, in the firing step described later, in order to suppress the generation of a by-product, the compound including a phosphorus atom may be excessively used by about 1 to 10%.

In the mixing, the mixing may be carried out while carrying out heating if necessary, and the mixing is usually carried out at room temperature.

In addition, the mixing may be carried out in the atmosphere, and is preferably carried out in an atmosphere of nitrogen gas and/or argon gas in which the oxygen gas content is adjusted in the range of 0 to 20% by volume.

In the firing step in the method for producing the compound (a), the mixture obtained in the mixing step is fired. In the case where the firing step is carried out a plurality of times, a pulverization step using, for example, a ball mill, or a mortar may be provided for the purpose of pulverizing or reducing the particle size of the fired product obtained in the firing step. In particular, the compound (a) has a low reaction rate of phase formation, and thus a reaction intermediate may be present in the first firing. In this case, it is preferable to carry out the first firing, carry out the pulverization step, and then further carry out the firing step.

The firing step may be carried out in the atmosphere, and is preferably carried out in an atmosphere of nitrogen gas and/or argon gas in which the oxygen gas content is adjusted in the range of 0 to 20% by volume.

The firing temperature depends on the firing time, and is preferably 800°C or higher and more preferably 950°C or higher, and preferably 1200°C or lower, more preferably 1100°C or lower, and still more preferably 1000°C or lower.

When the firing temperature is in the above range, a lithium atom is less likely to flow out of the system, and the compound (a) having a high ion conductivity tends to be easily obtained.

The firing time (the total firing time when the firing step is carried out several times) depends on the firing temperature, and is preferably 1 hour or longer and more preferably 3 hours or longer, and preferably 16 hours or shorter and more preferably 12 hours or shorter.

When the firing time is in the above range, a lithium atom is less likely to flow out of the system, and a compound having a high ion conductivity tends to be easily obtained.

If the fired product obtained after the firing step is left in the atmosphere, the fired product may absorb moisture or react with carbon dioxide to alter in quality. Because of this, the fired product obtained after the firing step is preferably transferred into a dehumidified inert gas atmosphere and stored when the temperature thereof drops to 200°C or less in temperature lowering after the firing step.

### • Phosphorus compound (b)

The phosphorus compound (b) is a compound different from the compound (a).

As the compound (b) used in the method (ii), one may be used, or two or more may be used.

The compound (b) is preferably an inorganic compound from the viewpoint of ease of handling.

The compound (b) may be produced and obtained by a conventionally known method, or a commercially available product may be used as the compound (b).

The compound (b) is preferably a crystalline compound. Whether the compound (b) is a crystalline compound can be determined, for example, from an X-ray diffraction (XRD) pattern of the compound (b).

As the compound (b), for example, a phosphate is preferable, and examples of the phosphate include diammonium hydrogen phosphate ((NH₄)₂HPO₄) and monoammonium dihydrogen phosphate (NH₄H₂PO₄) in that these are easily decomposed and reacted.

In addition, examples of the phosphorus compound that may be used include LiPO₃ and Li₃PO₄.

In the method (ii), it is preferable to use the compound (a) and the compound (b) in amounts such that the content of each constituent element in the present material obtained is in the above range.

### • Compound (c)

The compound (c) is a compound including lithium, tantalum, phosphorus, and oxygen as constituent elements, is preferably an oxide including these elements, and is more preferably a lithium ion conductive compound including these elements.

However, the compound (c) is a compound having a value A represented by the above expression (1) in the above range.

The compound (c) is preferably a compound having a monoclinic structure. Whether the compound (c) has a monoclinic structure can be determined, for example, by Rietveld analysis of an X-ray diffraction (XRD) pattern of the compound (c), specifically by the method of the following Examples.

The method for producing the compound (c) is not particularly limited, and examples thereof include the same production method as for the compound (a).
In addition, for the same reason as in the production of the compound (a), obtained fired product is preferably transferred into a dehumidified inert gas atmosphere and stored as when producing the compound (a).

### <<Solid electrolyte>>

The solid electrolyte according to one embodiment of the present invention (hereinafter, also referred to as "the present electrolyte") contains: a lithium ion conducting phase having at least tantalum, phosphorus, and oxygen as constituent elements; and a compound phase having at least phosphorus and oxygen as constituent elements and being free of tantalum,
in which, in a scanning transmission electron microscopy-energy dispersive X-ray spectroscopy (STEM-EDX) image, the area proportion of the compound phase is 0.40% or more based on 100% in total of the area of the lithium ion conducting phase, the area of the compound phase, and the area of voids, and
the present electrolyte has at least lithium, tantalum, phosphorus, and oxygen as constituent elements.

By using the present electrolyte, there can be easily provided a battery that is highly reliable (less likely to crack and less likely to be short-circuited due to suppressed dendrite production).

The lithium ion conducting phase and compound phase can be identified from a STEM-EDX image of the present electrolyte, and can be specifically identified by the method described in the following Examples.

The lithium ion conducting phase is not particularly limited as long as it has at least tantalum, phosphorus, and oxygen as constituent elements, but preferably has lithium as a constituent element, and may also have niobium and boron as constituent elements.

The lithium ion conducting phase can be identified as the location where tantalum, phosphorus, and oxygen are all present in elemental mapping when observing a STEM-EDX image of the present electrolyte.

The lithium ion conducting phase included in the present electrolyte preferably has a monoclinic structure.

Also, the monoclinic ratio (= crystal quantity of monoclinic crystal × 100/total crystal quantity of confirmed crystals) of the lithium ion conducting phase included in the present electrolyte is preferably 70% or more, more preferably 80% or more, and still more preferably 90% or more, and the upper limit thereof is not particularly limited and is 100%.

When the monoclinic ratio of the lithium ion conducting phase included in the present electrolyte is in the above range, the present electrolyte tends to be a solid electrolyte having a high ion conductivity both within a crystal grain and at a grain boundary.

Whether the lithium ion conducting phase included in the present electrolyte has a monoclinic structure and the monoclinic ratio can be determined, for example, by Rietveld analysis of an X-ray diffraction (XRD) pattern of the present electrolyte, specifically by the following method.

Using a powder X-ray diffraction analyzer, PANalytical MPD (manufactured by Spectris Co., Ltd.), X-ray diffraction measurement of the present electrolyte (Cu-Kα radiation (output: 45 kV, 40 mA), diffraction angle 2θ = range of 10 to 50°, step width: 0.013°, incident side Sollerslit: 0.04 rad, incident side Anti-scatter slit: 2°, light receiving side Sollerslit: 0.04 rad, light receiving side Anti-scatter slit: 5 mm) is carried out to obtain an X-ray diffraction (XRD) pattern. The crystal structure is confirmed by carrying out Rietveld analysis of the obtained XRD pattern using the known analysis software RIETAN-FP (available on creator; Fujio Izumi's website "RIETAN-FP/VENUS system distribution file" (http://fujioizumi.verse.jp/download/download.html)) .

From the viewpoint of, for example, being a solid electrolyte having a high lithium ion conductivity, the relative density of the present electrolyte is preferably 70% or more, more preferably 80% or more, still more preferably 90% or more, and particularly preferably 95% or more, and the upper limit is not particularly limited and is 100%.

The relative density is the percentage of the measured density calculated from the mass and volume of the present electrolyte divided by the theoretical density of the present electrolyte (measured density/theoretical density × 100).

Note that, specifically, the theoretical density is calculated by weight averaging using the theoretical density of each of the crystal structures constituting the present electrolyte and the content of each of the crystal structures. For example, in the case where the present electrolyte has a crystal structure 1 having a content of h% and a crystal structure 2 having a content of k%, the theoretical density can be calculated by (theoretical density of crystal structure 1 × h + theoretical density of crystal structure 2 × k)/100.

The content of each crystal structure can be determined by Rietveld analysis.

The compound phase is a phase other than the lithium ion conducting phase, and is a phase that has at least phosphorus and oxygen as constituent elements and is free of tantalum. Preferably, it further has lithium as a constituent element.

The compound phase is identified in a STEM-EDX image of the present electrolyte as the part that is not the lithium ion conducting phase, has phosphorus and oxygen as constituent elements, is free of tantalum, and is not a void.

The compound phase is preferably an amorphous phase. When the compound phase is amorphous, a solid electrolyte with fewer voids can be easily obtained.

Whether the compound phase is amorphous or not can be specifically confirmed by observation of a STEM-EDX image of the present electrolyte, in which the compound phase can be confirmed, while it can also be confirmed by the absence of diffraction patterns other than that of the monoclinic crystal described above in X-ray diffraction measurement, or by the absence of electron diffraction lines other than that of the monoclinic crystal described above in transmission electron microscope (TEM) observation, for example.

The area proportion of the compound phase in the present electrolyte is preferably 0.5% or more, more preferably 1.0% or more, and still more preferably 1.5% or more, and although the upper limit of the area proportion is not particularly limited, it is preferably 10% or less and more preferably 8.0% or less, based on 100% in total of the area of the lithium ion conducting phase, the area of the compound phase, and the area of voids.

By using the present electrolyte in which the area proportion of the compound phase is in the above range, there can be easily provided a battery that is highly reliable (less likely to crack and less likely to be short-circuited due to suppressed dendrite production).

The area proportion of the compound phase can be confirmed from a STEM-EDX image of the present electrolyte, and can be specifically confirmed by the method described in the following Examples.

The present electrolyte is preferably a solid electrolyte in which, in a STEM-EDX image of the present electrolyte, no voids are observed, or in the case where voids are observed, the area proportion of the voids is smaller than the area proportion of the compound phase.

The difference between the area proportion (%) of the voids and the area proportion (%) of the compound phase (area proportion of compound phase - area proportion of voids) is more than 0, preferably 2.0 or more, and more preferably 2.5 or more.

By using the present electrolyte in which there are no voids, or in which the difference between the area proportion of the voids and the area proportion of the compound phase is in the above range, there can be easily provided a battery that is highly reliable (less likely to crack and less likely to be short-circuited due to suppressed dendrite production).

Whether the voids are present or absent and the area proportion of the voids can be confirmed from a STEM-EDX image of the present electrolyte, and can be specifically confirmed by the method described in the following Examples.

In the case where the present electrolyte has the voids, the area proportion of the voids is preferably 3.0% or less, more preferably 2.0% or less, and still more preferably 1.0% or less, based on 100% in total of the area of the lithium ion conducting phase, the area of the compound phase, and the area of the voids, and the smaller the lower limit of the area proportion, the more preferable it is.

By using the present electrolyte in which the area proportion of the voids is in the above range, there can be easily provided a battery that is highly reliable (less likely to crack and less likely to be short-circuited due to suppressed dendrite production).

The area proportion of the voids can be confirmed from a STEM-EDX image of the present electrolyte, and can be specifically confirmed by the method described in the following Examples.

An electrolyte in which the area proportion of the compound phase, as well as the area proportion of the voids, is in the above range can be obtained, for example, by firing a solid electrolyte material that includes at least tantalum, phosphorus, and oxygen and satisfies the value A represented by the above expression (1) by the step A described later.

Even if phases such as Ta₂O₅, LiTaaOs, and LiTaO₃ are included in the present electrolyte in addition to the lithium ion conducting phase and the compound phase in an area proportion of less than 0.01% compared to the area proportion of the compound phase, there is no reliability problem for the present electrolyte.

The total ion conductivity of the present electrolyte is preferably 2.00 × 10⁻⁴ S·cm⁻¹ or more, and more preferably 3.00 × 10⁻⁴ S·cm⁻¹ or more.

The present electrolyte whose total ion conductivity is in the above range is preferable since it has a sufficient ion conductivity.

Specifically, the total ion conductivity can be measured by the following method.

A gold layer is formed on each of both sides of the present electrolyte (sintered body) using a sputtering machine to obtain a measurement pellet for ion conductivity evaluation, and the obtained measurement pellet is kept in a constant temperature bath at 25°C for 2 hours before measurement. Next, AC impedance measurement is carried out at 25°C in a frequency range of 1 Hz to 10 MHz under a condition of an amplitude of 25 mV using an impedance analyzer (manufactured by Solartron Analytical, model number: 1260A). The obtained impedance spectrum is fitted with an equivalent circuit using the equivalent circuit analysis software ZView included with the analyzer to determine the lithium ion conductivity within a crystal grain and the lithium ion conductivity at a crystal grain boundary, and these are added up to calculate the total conductivity.

### <Method for producing the present electrolyte>

The method for producing the present electrolyte preferably includes a step A in which the present material is fired to obtain a solid electrolyte, which is a sintered body. Since the present material is often obtained as a powder, it is more preferable in the method to mold the present material into a predetermined shape and then carry out the step A.

The firing temperature in the step A is preferably 500°C or higher, more preferably 600°C or higher, and still more preferably 650°C or higher, and preferably 1200°C or lower, more preferably 1150°C or lower, and still more preferably 1100°C or lower.

When the present material is used, a sintered body having a sufficient ion conductivity can be obtained even when it is fired in such a temperature range.

The firing time in the step A depends on the firing temperature, and is preferably 1 hour or longer and more preferably 2 hours or longer, and preferably 144 hours or shorter and more preferably 96 hours or shorter.

When the firing time is in the above range, a sintered body having a sufficient ion conductivity can be obtained even when the present material is fired at such a low temperature.

The firing in the step A may be carried out in the atmosphere, and is preferably carried out in an atmosphere of nitrogen gas and/or argon gas in which the oxygen gas content is adjusted in the range of 0 to 20% by volume.

In addition, the firing in the step A may be carried out in a reducing gas atmosphere such as a nitrogen-hydrogen mixed gas including a reducing gas such as hydrogen gas. The ratio of hydrogen gas included in the nitrogen-hydrogen mixed gas is, for example, 1 to 10% by volume. As the reducing gas other than hydrogen gas, for example, ammonia gas, or carbon monoxide gas may be used.

In the step A, it is preferable to fire a molded body obtained by molding the present material and it is more preferable to fire a molded body obtained by press molding the present material, from the viewpoint of, for example, being able to easily obtain a solid electrolyte (sintered body) having a higher ion conductivity.

The pressure when press molding the present material is not particularly limited, and is preferably 50 MPa or more and more preferably 100 MPa or more, and preferably 500 MPa or less and more preferably 400 MPa or less.

The shape of the molded body obtained by press molding the present material is not particularly limited, either, and is preferably a shape dependent on the intended use of the sintered body (solid electrolyte) obtained by firing the molded body, such as the form of pellet, coin, or film.

When producing the present electrolyte, other components other than the present material may be used. Examples of the other components include a conventionally known material used for a solid electrolyte of an all-solid-state battery, and examples of, for example, a lithium ion conductive compound include a lithium ion conductive material having a structure such as NASICON type one or LISICON type one.

As each of the other components, one may be used, or two or more may be used.

The amount of the other components used is preferably 50% by mass or less and more preferably 30% by mass or less per 100% by mass in total of the other components and the present material, and the other components are preferably not used.

### <<All-solid-state battery>>

The all-solid-state battery according to one embodiment of the present invention (hereinafter, also referred to as "the present battery") includes a positive electrode having a positive electrode active material, a negative electrode having a negative electrode active material, and a solid electrolyte layer between the positive electrode and the negative electrode, wherein the solid electrolyte layer includes the present electrolyte.

The present battery may be a primary battery or a secondary battery, and is preferably a secondary battery and more preferably a lithium ion secondary battery, from the viewpoint of, for example, exerting the advantageous effects of the present invention more.

The structure of the present battery is not particularly limited as long as the present battery include a positive electrode, a negative electrode, and a solid electrolyte layer between the positive electrode and the negative electrode, and may be a so-called thin film type, laminated type, or bulk type.

### <Solid electrolyte layer>

The solid electrolyte layer is not particularly limited as long as the solid electrolyte layer includes the present electrolyte, and if necessary, may include a conventionally known additive used for the solid electrolyte layer of the all-solid-state battery, and the solid electrolyte layer preferably consists only of the present electrolyte.

The thickness of the solid electrolyte layer may be appropriately selected according to the structure (for example, thin film type) of the battery to be formed, and is preferably 50 nm or more and more preferably 100 nm or more, and preferably 1000 µm or less and more preferably 100 µm or less.

### <Positive electrode>

The positive electrode is not particularly limited as long as the positive electrode has a positive electrode active material, and preferable examples thereof include a positive electrode having a positive electrode current collector and a positive electrode active material layer.

### [Positive electrode active material layer]

The positive electrode active material layer is not particularly limited as long as the positive electrode active material layer includes a positive electrode active material, and the positive electrode active material layer preferably includes a positive electrode active material and a solid electrolyte and may further include an additive such as an electrically conductive aid or a sintering aid.

The thickness of the positive electrode active material layer may be appropriately selected according to the structure (for example, thin film type) of the battery to be formed, and is preferably 10 µm or more, more preferably 30 µm or more, and still more preferably 50 µm or more, and preferably 200 µm or less, more preferably 150 µm or less, and still more preferably 100 µm or less.

### • Positive electrode active material

Examples of the positive electrode active material include LiCo oxide, LiNiCo oxide, LiNiCoMn oxide, LiNiMn oxide, LiMn oxide, LiMn spinel, LiMnNi oxide, LiMnAl oxide, LiMnMg oxide, LiMnCo oxide, LiMnFe oxide, LiMnZn oxide, LiCrNiMn oxide, LiCrMn oxide, lithium titanate, metal lithium phosphate, a transition metal oxide, titanium sulfide, graphite, hard carbon, a transition metal-containing lithium nitride, silicon oxide, lithium silicate, lithium metal, a lithium alloy, a Li-containing solid solution, and a lithium-storing intermetallic compound.

Among these, LiNiCoMn oxide, LiNiCo oxide, and LiCo oxide are preferable, and LiNiCoMn oxide is more preferable, from the viewpoint of, for example, having a good affinity with a solid electrolyte, having an excellent balance of macroscopic electrical conductivity, microscopic electrical conductivity, and ion conductivity, having a high average potential, and being able to increase the energy density or battery capacity in the balance between specific capacity and stability.

In addition, the surface of the positive electrode active material may be coated with, for example, an ion conductive oxide such as lithium niobate, lithium phosphate, or lithium borate.

As the positive electrode active material used for the positive electrode active material layer, one may be used or two or more may be used.

Preferable examples of the positive electrode active material also include LiM3PO₄ [M3 is one or more elements selected from the group consisting of Mn, Co, Ni, Fe, Al, Ti, and V, or two elements V and O.J, LiM5VO₄ [M5 is one or more elements selected from the group consisting of Fe, Mn, Co, Ni, Al, and Ti.], Li₂M6P₂O₇ [M6 is one or more elements selected from the group consisting of Fe, Mn, Co, Ni, Al, Ti, and V, or two elements V and 0.], LiVP₂O₇, Liₓ₇V_{y7}M7_{z7} [2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr.], Li₁₊ₓ₈Alₓ₈M8₂₋ₓ₈(PO₄)₃ [0 ≤ x8 ≤ 0.8, and M8 is one or more elements selected from the group consisting of Ti and Ge.], LiNi_{1/3}Co_{1/3}Mn_{1/3}O₂, LiCoO₂, LiNiO₂, LiMn₂O₄, Li₂CoP₂O₇, Li₃V₂(PO₄)₃, Li₃Fe₂(PO₄)₃, LiNi_{0.5}Mn_{1.5}O₄, and Li₄Ti₅O₁₂.

The positive electrode active material is preferably in the form of a particle. The 50% diameter in the volume-based particle size distribution thereof is preferably 0.1 µm or more, more preferably 0.3 µm or more, still more preferably 0.4 µm or more, and particularly preferably 0.5 µm or more, and preferably 30 µm or less, more preferably 20 µm or less, still more preferably 10 µm or less, and particularly preferably 3 µm or less.

In addition, the ratio of the length of the major axis to the length of the minor axis (length of the major axis/length of the minor axis), that is, the aspect ratio, of the positive electrode active material is preferably less than 3 and more preferably less than 2.

The positive electrode active material may form a secondary particle. In that case, the 50% diameter in the number-based particle size distribution of the primary particle is preferably 0.1 µm or more, more preferably 0.3 µm or more, still more preferably 0.4 µm or more, and particularly preferably 0.5 µm or more, and preferably 20 µm or less, more preferably 15 µm or less, still more preferably 10 µm or less, and particularly preferably 2 µm or less.

The content of the positive electrode active material in the positive electrode active material layer is preferably 20% by mass or more and more preferably 30% by mass or more, and preferably 80% by mass or less and more preferably 70% by mass or less.

When the content of the positive electrode active material is in the above range, the positive electrode active material functions favorably, and a battery having a high energy density tends to be able to be easily obtained.

### • Solid electrolyte

The solid electrolyte that can be used for the positive electrode active material layer is not particularly limited, and a conventionally known solid electrolyte can be used, and the present electrolyte is preferably used from the viewpoint of, for example, exerting the advantageous effects of the present invention more.

As the solid electrolyte used for the positive electrode active material layer, one may be used or two or more may be used.

### • Additives

Preferable examples of the electrically conductive aid include a metal material such as Ag, Au, Pd, Pt, Cu, or Sn, and a carbon material such as acetylene black, ketjen black, a carbon nanotube, or a carbon nanofiber.

As the sintering aid, the compound (b), a compound including a boron atom, a compound including a niobium atom, a compound including a bismuth atom, and a compound including a silicon atom are preferable.

As each additive used for the positive electrode active material layer, one may be used or two or more may be used.

### • Positive electrode current collector

The positive electrode current collector is not particularly limited as long as the material thereof is one that conducts an electron without causing an electrochemical reaction. Examples of the material of the positive electrode current collector include a simple substance of a metal such as copper, aluminum, or iron, an alloy including any of these metals, and an electrically conductive metal oxide such as antimony-doped tin oxide (ATO) or tin-doped indium oxide (ITO).

As the positive electrode current collector, a current collector obtained by providing an electrically conductive adhesive layer on the surface of an electric conductor can also be used. Examples of the electrically conductive adhesive layer include a layer including, for example, a granular electrically conductive material, or a fibrous electrically conductive material.

### <Negative electrode>

The negative electrode is not particularly limited as long as the negative electrode has a negative electrode active material, and preferable examples thereof include a negative electrode having a negative electrode current collector and a negative electrode active material layer.

### [Negative electrode active material layer]

The negative electrode active material layer is not particularly limited as long as the negative electrode active material layer includes a negative electrode active material, and the negative electrode active material layer preferably includes a negative electrode active material and a solid electrolyte and may further include an additive such as an electrically conductive aid or a sintering aid.

The thickness of the negative electrode active material layer may be appropriately selected according to the structure (for example, thin film type) of the battery to be formed, and is preferably 10 µm or more, more preferably 30 µm or more, and still more preferably 50 µm or more, and preferably 200 µm or less, more preferably 150 µm or less, and still more preferably 100 µm or less.

### • Negative electrode active material

Examples of the negative electrode active material include a lithium alloy, a metal oxide, graphite, hard carbon, soft carbon, silicon, a silicon alloy, silicon oxide SiOₙ (0 < n ≤ 2), a silicon/carbon composite material, a composite material including silicon within a pore of porous carbon, lithium titanate, and graphite coated with lithium titanate.

Among these, a silicon/carbon composite material and a composite material including a silicon domain in a pore of porous carbon are preferable because these have a high specific capacity and can increase the energy density and the battery capacity. A composite material including a silicon domain in a pore of porous carbon is more preferable, has excellent alleviation of volume expansion associated with lithium storage/release by silicon, and can maintain the balance of macroscopic electrical conductivity, microscopic electrical conductivity, and ion conductivity well. A composite material including a silicon domain in a pore of porous carbon in which the silicon domain is amorphous, the size of the silicon domain is 10 nm or less, and the pore derived from the porous carbon is present in the vicinity of the silicon domain is particularly preferable.

Preferable examples of the negative electrode active material also include LiM3PO₄ [M3 is one or more elements selected from the group consisting of Mn, Co, Ni, Fe, Al, Ti, and V, or two elements V and O.], LiM5VO₄ [M5 is one or more elements selected from the group consisting of Fe, Mn, Co, Ni, Al, and Ti.], Li₂M6P₂O₇ [M6 is one or more elements selected from the group consisting of Fe, Mn, Co, Ni, Al, Ti, and V, or two elements V and O.], LiVP₂O₇, Liₓ₇V_{y7}M7_{z7} [2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr.], Li₁₊ₓ₈Alₓ₈M8₂₋ₓ₈(PO₄)₃ [0 ≤ x8 ≤ 0.8, and M8 is one or more elements selected from the group consisting of Ti and Ge.], (Li_{3-a9x9+(5-b9)y9}M9ₓ₉)(V_{1-y9}M10_{y9})O₄ [M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is the average valence of M9, and b9 is the average valence of M10.], LiNb₂O₇, Li₄Ti₅O₁₂, Li₄Ti₅PO₁₂, TiO₂, LiSi, and graphite.

The negative electrode active material is preferably in the form of a particle. The 50% diameter in the volume-based particle size distribution thereof, the aspect ratio, and the 50% diameter in the number-based particle size distribution of a primary particle in the case where the negative electrode active material forms a secondary particle are preferably in the same ranges as for the positive electrode active material.

The content of the negative electrode active material in the negative electrode active material layer is preferably 20% by mass or more and more preferably 30% by mass or more, and preferably 80% by mass or less and more preferably 70% by mass or less.

When the content of the negative electrode active material is in the above range, the negative electrode active material functions favorably, and a battery having a high energy density tends to be able to be easily obtained.

### • Solid electrolyte

The solid electrolyte that can be used for the negative electrode active material layer is not particularly limited, and a conventionally known solid electrolyte can be used, and the present electrolyte is preferably used from the viewpoint of, for example, exerting the advantageous effects of the present invention more.

As the solid electrolyte used for the negative electrode active material layer, one may be used or two or more may be used.

### • Additives

Preferable examples of the electrically conductive aid include a metal material such as Ag, Au, Pd, Pt, Cu, or Sn, and a carbon material such as acetylene black, ketjen black, a carbon nanotube, or a carbon nanofiber.

As the sintering aid, the compound (b), a compound including a boron atom, a compound including a niobium atom, a compound including a bismuth atom, and a compound including a silicon atom are preferable.

As each additive used for the negative electrode active material layer, one may be used or two or more may be used.

### • Negative electrode current collector

As the negative electrode current collector, the same current collector as for the positive electrode current collector can be used.

### <Method for producing all-solid-state battery>

The all-solid-state battery can be formed, for example, by a known powder molding method. For example, the positive electrode current collector, a powder for the positive electrode active material layer, a powder for the solid electrolyte layer, a powder for the negative electrode active material layer, and the negative electrode current collector are stacked in this order, these are powder-molded at the same time, and thereby formation of each layer of the positive electrode active material layer, the solid electrolyte layer, and the negative electrode active material layer, and connection between any adjacent two of the positive electrode current collector, the positive electrode active material layer, the solid electrolyte layer, the negative electrode active material layer, and the negative electrode current collector can be carried out at the same time.

When carrying out this powder molding, it is preferable to carry out firing at the same temperature as the firing temperature in the step A while applying a pressure comparable to the pressure when press molding the present material in the step A.

According to one embodiment of the present invention, even if the firing temperature when manufacturing the all-solid-state battery is low, an all-solid-state battery exhibiting a sufficient ion conductivity can be obtained, and thus it is possible to manufacture an all-solid-state battery with excellent economic efficiency and equipment saving while suppressing, for example, decomposition, and alteration in quality of another material such as a positive electrode or negative electrode material.

Each layer of the positive electrode active material layer, the solid electrolyte layer, and the negative electrode active material layer may be powder-molded, and when an all-solid-state battery is manufactured using each of the obtained layers, each of the layers is preferably pressed to carry out firing.

In addition, the all-solid-state battery can also be manufactured, for example, by the following method.

For example, a solvent and/or a resin are(is) appropriately mixed into a material for positive electrode active material layer formation, a material for solid electrolyte layer formation, and a material for negative electrode active material layer formation to prepare pastes for formation of the layers, respectively, and the pastes are applied onto base sheets, respectively, and dried to manufacture a green sheet for the positive electrode active material layer, a green sheet for the solid electrolyte layer, and a green sheet for the negative electrode active material layer. Next, the green sheet for the positive electrode active material layer, the green sheet for the solid electrolyte layer, and the green sheet for the negative electrode active material layer from each of which the base sheet is peeled off are sequentially laminated, thermocompression bonded at a predetermined pressure, and then enclosed in a container and pressurized by, for example, hot isostatic pressing, cold isostatic pressing, or isostatic pressing to manufacture a laminated structure.

After that, if necessary, the laminated structure is subjected to degreasing treatment at a predetermined temperature and then to firing treatment to manufacture a laminated sintered body.

The firing temperature in this firing treatment is preferably the same as the firing temperature in the step A.

Next, if necessary, an all-solid-state battery can also be manufactured by forming a positive electrode current collector and a negative electrode current collector on both principal surfaces of the laminated sintered body by, for example, a sputtering method, a vacuum vapor deposition method, or application or dipping of a metal paste.

### Examples

Hereinafter, one embodiment of the present invention will be specifically described based on Examples. Note that the present invention is not limited to these Examples.

### [Example 1]

Lithium carbonate (Li₂CO₃) (manufactured by Sigma-Aldrich, Merck, purity of 99.0% or more), tantalum pentoxide (Ta₂O₅) (manufactured by FUJIFILM Wako Pure Chemical Corporation, purity of 99.9%), and diammonium hydrogen phosphate ((NH₄)₂HPO₄) (manufactured by Sigma-Aldrich, Merck, purity of 98% or more) were weighed such that the ratio of the numbers of atoms of lithium, tantalum, and phosphorus (Li:Ta:P) of the resulting solid electrolyte material and solid electrolyte satisfied the stoichiometric formula shown in Table 1; further, considering a lithium atom flowing out of the system during the following firing, lithium carbonate was weighed in such a way as to provide an amount of 1.05 times the amount of lithium atoms in Table 1; and in order to suppress the generation of a by-product during the following firing, diammonium hydrogen phosphate was weighed in such a way as to provide an amount of 1.06 times the amount of phosphorus atoms in Table 1. At this time, the remaining elements to be weighed were weighed, assuming that they would not flow out of the system at the firing temperature.

An appropriate amount of toluene was added to each raw material powder weighed, which was pulverized and mixed for 2 hours using a zirconia ball mill (zirconia ball: diameter of 5 mm) to obtain a primary mixture.

The obtained primary mixture was placed in an alumina boat, and the temperature thereof was raised to 1000°C under a condition of a temperature rise rate of 10°C/min in an atmosphere of air (flow rate: 100 mL/min) using a rotary kiln (manufactured by Motoyama Co., Ltd.), and the mixture was fired at that temperature for 4 hours to obtain a primary fired product.

An appropriate amount of toluene was added to the obtained primary fired product, which was pulverized and mixed for 2 hours using a zirconia ball mill (zirconia ball: diameter of 1 mm) to obtain a secondary mixture (solid electrolyte material).

Using a tableting machine, a pressure of 40 MPa was applied with a hydraulic press to the obtained secondary mixture to form a disk-shaped molded body having a diameter of 10 mm and a thickness of 1 mm, and next, a pressure of 300 MPa was applied to the disk-shaped molded body by CIP (cold isostatic pressing) to manufacture a pellet.

The obtained pellet was placed in an alumina boat, and the temperature thereof was raised to 1100°C under a condition of a temperature rise rate of 10°C/min in an atmosphere of air (flow rate: 100 mL/min) using a rotary kiln (manufactured by Motoyama Co., Ltd.), and the pellet was fired at that temperature for 3 hours to obtain a solid electrolyte (sintered body).

The temperature of the obtained solid electrolyte was lowered to room temperature, then taken out from the rotary kiln, transferred into a dehumidified nitrogen gas atmosphere, and stored.

### [Example 2]

A solid electrolyte material and a solid electrolyte were manufactured in the same manner as in Example 1 except that: in Example 1, boric acid (H₃BO₃) (manufactured by FUJIFILM Wako Pure Chemical Corporation, purity of 99.5% or more) was further used; each raw material powder was used such that the ratio of the numbers of atoms of lithium, tantalum, boron, and phosphorus (Li:Ta:B:P) of the resulting solid electrolyte material and solid electrolyte satisfied the stoichiometric formula shown in Table 1; and the firing conditions of the pellet were changed to 900°C for 2 hours.

### [Example 3]

A solid electrolyte material and a solid electrolyte were manufactured in the same manner as in Example 2 except that: in Example 2, niobium pentoxide (Nb₂O₅) (manufactured by FUJIFILM Wako Pure Chemical Corporation, purity of 99.9%) was further used; and each raw material powder was used such that the ratio of the numbers of atoms of lithium, tantalum, niobium, boron, and phosphorus (Li:Ta:Nb:B:P) of the resulting solid electrolyte material and solid electrolyte satisfied the stoichiometric formula shown in Table 1.

### [Comparative Example 1]

A solid electrolyte material and a solid electrolyte were manufactured in the same manner as in Example 1 except that the respective raw material powders, Lithium carbonate (Li₂CO₃) (manufactured by Sigma-Aldrich, Merck, purity of 99.0% or more), tantalum pentoxide (Ta₂O₅) (manufactured by FUJIFILM Wako Pure Chemical Corporation, purity of 99.9%), and diammonium hydrogen phosphate ((NH₄)₂HPO₄) (manufactured by Sigma-Aldrich, Merck, purity of 98% or more), were used such that the ratio of the numbers of atoms of lithium, tantalum, and phosphorus (Li:Ta:P) of the resulting solid electrolyte material and solid electrolyte satisfied the stoichiometric formula shown in Table 1.

### <STEM-EDX>

Using a scanning transmission electron microscope (STEM) equipped with an energy dispersive X-ray spectrometer (EDX) (HD-2300, manufactured by Hitachi High-Tech Corporation), scattered electron images (Z-contrast images) and EDX mapping images (characteristic X-ray for mapping phosphorus: K-ray, characteristic X-ray for mapping tantalum: M-ray) of a cross-section of the obtained solid electrolyte were photographed at an acceleration voltage of 200 kV at 10 locations in a 2500 nm × 1800 nm field of view, and the images were analyzed using the image processing software Image J by the National Institutes of Health.

The STEM-EDX image of the solid electrolytes obtained in Example 3 and Comparative Example 1 are shown in Figures 1 and 2, respectively (EDX mapping image of oxygen is not shown).

In Figure 1, the part where the tantalum and phosphorus signals can be confirmed in the EDX mapping image is the lithium ion conducting phase, and it was found from the EDX mapping that at least tantalum, phosphorus, and oxygen are present as constituent elements.

Also, in Figure 1, the part where only the phosphorus signal can be confirmed in the EDX mapping image and that is not the identified lithium ion conducting phase is the compound phase, and it was found from the EDX mapping that the compound phase has at least phosphorus as a constituent element and is free of tantalum.

Furthermore, in Figure 1, the part where neither phosphorus nor tantalum signals are confirmed in the EDX mapping image is a void.

The area proportion of the compound phase in 100% of the single entire STEM-EDX image photographed was calculated. The free software "Image J" was used to calculate the area proportion (https://imagej.nih.gov/ij/).

Also, the area proportion of the voids (porosity) in 100% of the single entire STEM-EDX image photographed was calculated.

The results are shown in Table 1. Note that the area proportion of the compound phase and the area proportion of the voids in Table 1 are the respective average values when the area proportion of the compound phase and the area proportion of the voids were calculated for each of the 10 STEM-EDX images in the same manner as described above.

**[Table 1]**

| | Stoichiometric formula | Value A | Area proportion of compound phase (%) | Area proportion of voids (%) | Area proportion of compound phase - area proportion of voids |
|---|---|---|---|---|---|
| Example 1 | LiTa_{1.9}P_{1.1}O₈ | 55.0 | 4.20 | 0.00 | 4.20 |
| Example 2 | Li_{1.15}Ta_{1.90}B_{0.10}P_{0.95}O_{7.85} | 55.3 | 2.69 | 0.14 | 2.55 |
| Example 3 | Li_{1.15}Ta_{1.71}Nb_{0.19}B_{0.10}P_{0.95}O_{7.85} | 55.3 | 4.64 | 1.14 | 3.50 |
| Comparative Example 1 | LiTa₂PO₈ | 50.0 | 0.37 | 3.24 | -2.87 |

### <X-ray diffraction (XRD)>

The obtained solid electrolyte was disintegrated using an agate mortar for 30 minutes to obtain a powder for XRD measurement.

Using a powder X-ray diffraction analyzer, PANalytical MPD (manufactured by Spectris Co., Ltd.), X-ray diffraction measurement of the obtained powder for XRD measurement (Cu-Kα radiation (output: 45 kV, 40 mA), diffraction angle 20 = range of 10 to 50°, step width: 0.013°, incident side Sollerslit: 0.04 rad, incident side Anti-scatter slit: 2°, light receiving side Sollerslit: 0.04 rad, light receiving side Anti-scatter slit: 5 mm) was carried out to obtain an X-ray diffraction (XRD) pattern. Rietveld analysis of the obtained XRD pattern was carried out using the known analysis software RIETAN-FP (available on creator; Fujio Izumi's website "RIETAN-FP/VENUS system distribution file" (http://fujioizumi.verse.jp/download/download.html)).

No diffraction patterns other than that of the monoclinic structure were observed in any of the solid electrolytes obtained in Examples 1 to 3 and Comparative Example 1.

## Claims

1. A solid electrolyte comprising: a lithium ion conducting phase comprising at least tantalum, phosphorus, and oxygen as constituent elements; and a compound phase comprising at least phosphorus and oxygen as constituent elements and being free of tantalum,
wherein, in a scanning transmission electron microscopy-energy dispersive X-ray spectroscopy image, an area proportion of the compound phase is 0.40% or more based on 100% in total of an area of the lithium ion conducting phase, an area of the compound phase, and an area of voids, and
the solid electrolyte comprises at least lithium, tantalum, phosphorus, and oxygen as constituent elements.

2. The solid electrolyte according to claim 1, wherein, in a scanning transmission electron microscopy-energy dispersive X-ray spectroscopy image, no voids are observed, or voids are observed and an area proportion of the voids is smaller than the area proportion of the compound phase.

3. The solid electrolyte according to claim 2, wherein the area proportion of the voids is 3.0% or less based on 100% in total of the area of the lithium ion conducting phase, the area of the compound phase, and the area of voids.

4. An all-solid-state battery comprising:
a positive electrode having a positive electrode active material;
a negative electrode having a negative electrode active material; and
a solid electrolyte layer between the positive electrode and the negative electrode,
wherein
the solid electrolyte layer comprises the solid electrolyte according to any one of claims 1 to 3.

5. The all-solid-state battery according to claim 4,
wherein
the positive electrode active material comprises one or more compounds selected from the group consisting of LiM3PO₄, LiM5VO₄, Li₂M6P₂O₇, LiVP₂O₇, Liₓ₇V_{y7}M7_{z7}, Li₁₊ₓ₈Alₓ₈M8₂₋ₓ₈(PO₄)₃, LiNi_{1/3}Co_{1/3}Mn_{1/3}O₂, LiCoO₂, LiNiO₂, LiMn₂O₄, Li₂CoP₂O₇, Li₃V₂(PO₄)₃, Li₃Fe₂(PO₄)₃, LiNi_{0.5}Mn_{1.5}O₄, and Li₄Ti₅O₁₂,
M3 is one or more elements selected from the group consisting of Mn, Co, Ni, Fe, Al, Ti, and V, or two elements V and O,
M5 is one or more elements selected from the group consisting of Fe, Mn, Co, Ni, Al, and Ti,
M6 is one or more elements selected from the group consisting of Fe, Mn, Co, Ni, Al, Ti, and V, or two elements V and O,
2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr,
0 ≤ x8 ≤ 0.8, and M8 is one or more elements selected from the group consisting of Ti and Ge.

6. The all-solid-state battery according to claim 4, wherein
the negative electrode active material comprises one or more compounds selected from the group consisting of LiM3PO₄, LiM5VO₄, Li₂M6P₂O₇, LiVP₂O₇, Liₓ₇V_{y7}M7_{z7}, Li₁₊ₓ₈Alₓ₈M8₂₋ₓ₈(PO₄)₃, (Li_{3-a9x9+(5-b9)y9}M9ₓ₉)(V_{1-y9}M10_{y9})O₄, LiNb₂O₇, Li₄Ti₅O₁₂, Li₄Ti₅PO₁₂, TiO₂, LiSi, and graphite,
M3 is one or more elements selected from the group consisting of Mn, Co, Ni, Fe, Al, Ti, and V, or two elements V and O,
M5 is one or more elements selected from the group consisting of Fe, Mn, Co, Ni, Al, and Ti,
M6 is one or more elements selected from the group consisting of Fe, Mn, Co, Ni, Al, Ti, and V, or two elements V and O,
2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr,
0 ≤ x8 ≤ 0.8, and M8 is one or more elements selected from the group consisting of Ti and Ge, and
M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is an average valence of M9, and b9 is an average valence of M10.

7. An all-solid-state battery comprising:
a positive electrode having a positive electrode active material;
a negative electrode having a negative electrode active material; and
a solid electrolyte layer between the positive electrode and the negative electrode,
wherein
the positive electrode, negative electrode, and solid electrolyte layer comprises the solid electrolyte according to any one of claims 1 to 3.

8. A solid electrolyte material comprising at least lithium, tantalum, phosphorus, and oxygen as constituent elements,
the solid electrolyte material optionally comprising at least one element selected from the following element M1 and the following element M2 as an optional constituent element, and
the solid electrolyte material having a value A represented by the following expression (1) of more than 50:
element M1; one or more elements selected from the group consisting of Bi, Nb, Zr, Ga, Sn, Hf, W, and Mo
element M2; one or more elements selected from the group consisting of B, Si, Al, and Ge A = (number of P atoms + total number of element M2 atoms) / (number of Ta atoms + total number of element M1 atoms) × 100
